(19) Europäisches Patentamt

European Patent Office

Office européen des brevets

(11) Veröffentlichungsnummer: **0 341 706 B1**

(12) **EUROPÄISCHE PATENTSCHRIFT**

(45) Veröffentlichungstag der Patentschrift: **10.11.93**

(21) Anmeldenummer: **89108466.7**

(22) Anmeldetag: **11.05.89**

(51) Int. Cl.⁵: **B29C 71/04**, C08L 27/16, C08L 27/18

(54) **Formkörper aus einem Vinylidenfluorid-Copolymeren und Verfahren zu seiner Herstellung.**

(30) Priorität: **13.05.88 DE 3816327**

(43) Veröffentlichungstag der Anmeldung:
**15.11.89 Patentblatt 89/46**

(45) Bekanntmachung des Hinweises auf die
Patenterteilung:
**10.11.93 Patentblatt 93/45**

(84) Benannte Vertragsstaaten:
**CH DE ES FR GB IT LI NL**

(56) Entgegenhaltungen:
**US-A- 3 738 923**

**RUBBER CHEMISTRY AND TECHNOLOGY,
Band 55, Nr. 3, Juli-August 1982, Seiten
575-668; G.G.A. BÖHM et al.: "The radiation
chemistry of elastomers and its industrial
applications"**

**CHEMICAL ABSTRACTS, Band 107, Nr. 24, 14.
Dezember 1987, Seite 67, Zusammenfassung
Nr. 219004r, Columbus, Ohio, US; & JP-A-62
146 931 (NIPPON VALOUA IND.) 20-12-1985**

(73) Patentinhaber: **HOECHST AKTIENGESELL-
SCHAFT**

**D-65926 Frankfurt(DE)**

(72) Erfinder: **Hengel, Rolf, Dr.
Watzmannring 37
D-8269 Burgkirchen(DE)**
Erfinder: **Notzon, Heinz
Lena-Christ-Strasse 17
D-8262 Altötting(DE)**

**Beschreibung**

Die Erfindung betrifft mit ionisierender Strahlung behandelte Formkörper aus einem Vinylidenfluorid-Copolymeren nach Anspruch 1 sowie ein Verfahren zu deren Herstellung nach Anspruch 5.

Aus US-PS 3,738,923 ist es bekannt, die Hochtemperatureigenschaften von thermoplastisch verarbeiteten Copolymerisaten aus Ethylen und Tetrafluorethylen oder Chlortrifluorethylen durch Behandlung mit ionisierender Strahlung bei oberhalb 60 °C zu verbessern. Ein ähnliches Verfahren ist aus DE-OS 20 60 215 bekannt, bei dem ein elastomeres Copolymerisat aus Tetrafluorethylen und Propylen mit gegebenenfalls weiteren Monomeren bestrahlt wird. Nachteilig an den Verfahren ist, daß zur thermoplastischen Verformung der Copolymerisate aus Tetrafluorethylen und Ethylen sehr hohe Temperaturen, im allgemeinen über 300 °C erforderlich sind, und die Copolymeren aus Tetrafluorethylen und Propylen bei Raumtemperatur nur eine geringe Festigkeit aufweisen.

Es ist ferner aus DE 35 24 370-A1 bekannt, die mechanischen Eigenschaften eines Formkörpers aus einem fluorhaltigen Pfropfcopolymeren durch Behandlung mit ionisierender Strahlung zu verbessern. Das Pfropfcopolymere kann beispielsweise aus Vinylidenfluorid, Chlortrifluorethylen und einer ungesättigten Peroxyverbindung, beispielsweise t-Butylperoxyallylcarbonat, erhalten werden, ihm wird Triallylisocyanurat zugemischt. Diese Formkörper zeigen gegenüber solchen, deren Polymeranteil vollständig aus fluorierten Verbindungen besteht, ungünstigere chemische und thermische Beständigkeit. Das Herstellverfahren ist wegen des Compoundierprozesses und der Möglichkeit, daß schon bei der thermoplastischen Verformung unerwünschte Reaktionen auftreten (sogenannte Scorching), schwierig.

Schließlich ist aus EP 195 565-A2 ein Verfahren bekannt, bei dem Copolymere von Vinylidenfluorid mit Hexafluorpropen und/oder Chlortrifluorethylen und gegebenenfalls Tetrafluorethylen als Lösung in einem mit Wasser nicht mischbaren Lösungsmittel in Gegenwart von Wasser mit einem Phasentransfer-Katalysator und einer anorganischen Base behandelt werden, wobei sich im Copolymeren C=C-Doppelbindungen bilden. Diese Copolymeren sollen ohne weitere, mehrere C=C-Doppelbindungen enthaltende Zusatzstoffe mit ionisierender Strahlung vernetzbar sein. Nähere Angaben hierzu fehlen. Auch dieses Verfahren ist sehr aufwendig. Außerdem führt es zwangsweise zu stark verfärbten Produkten.

Es wurde nun ein Verfahren gefunden, das es ermöglicht, verbesserte Formkörper ohne die oben beschriebenen Nachteile zu erzeugen. Ein solcher Formkörper, hergestellt durch thermoplastische Verformung eines fluorhaltigen Polymeren, das, gemessen bei 250 °C mit 11 kg Last, einen Schmelzindex von mindestens 1 g/10 min aufweist und dem gegebenenfalls bis zu 20 Gew.-%, bezogen auf den Formkörper, von einem oder mehreren inerten Zusatzstoffen beigemischt sind, mit anschließender Behandlung mit ionisierender Strahlung, ist dadurch gekennzeichnet, daß der Polymeranteil des Formkörpers ausschließlich aus polymerisierten Einheiten von Vinylidenfluorid und anderen fluorhaltigen Monomeren, die nur eine C=C-Doppelbindung enthalten, besteht, maximal 50 Gew.-%, bezogen auf den Polymeranteil, polymerisierten Einheiten des Vinylidenfluorids innehat und einen Kristallitschmelzpunkt von 100 bis 240 °C aufweist, wobei der Formkörper bei Raumtemperatur eine Reißdehnung von mindestens 250 % aufweist und bei 250 °C eine Torsionsschubmodul von mindestens 0,5 N/mm$^2$ hat sowie bei 11 kg Last keinen meßbaren Schmelzindex zeigt.

Für die Messung der genannten physikalischen Kenngrößen sind beispielsweise folgende Methoden geeignet: Schmelzindex nach DIN 53735; Torsionsschubmodul nach DIN 53445; Reißdehnung nach DIN 53455 sowie Kristallitschmelzpunkt vermittels Differential-Thermoanalyse.

Der Polymeranteil des Formkörpers soll ausschließlich aus polymerisierten Einheiten von Vinylidenfluorid und anderen fluorhaltigen Monomeren, die nur eine C=C-Doppelbindung haben, bestehen. Von diesen fluorhaltigen Monomeren können eines oder mehrere vorhanden sein, vorzugsweise solche der Formel

$$YZC = CF-R_f$$

worin bedeuten,

Y = F, Cl, H

Z = F, Cl, H und

$R_f$ = F oder $CF_3$, ausgenommen Vinylidenfluorid selbst.

Beispiele für geeignete Copolymere sind solche aus Vinylidenfluorid und Hexafluorpropen, aus Vinylidenfluorid und Chlortrifluorethen, aus Vinylidenfluorid und Tetrafluorethen, besonders bevorzugt sind Copolymere aus Vinylidenfluorid, Tetrafluorethen und Hexafluorpropen. Die Herstellung solcher Copolymerer erfolgt beispielsweise durch Polymerisation der Monomer-Komponenten unter Druck in wäßriger Phase in Gegenwart mindestens eines Emulgators, eines Puffers, mindestens eines Initiators und eines Kettenübertragungsmittels. Nach der Polymerisation wird die entstandene Polymerdispersion durch Zusatz einer starken Mineralsäure, beispielsweise Salzsäure, in gelförmigem Zustand übergeführt und das Gel mit einem wasserunlöslichen Lösungsmittel, beispielsweise Trichlortrifluorethan oder Benzin, granuliert und nach Entfernung der Hauptmenge des Lösungsmittels das Granulat in der Wirbelschicht getrocknet. Geeignete Herstellverfahren sind beispielsweise beschrieben in den US-Patentschriften 3,006,881; 3,072,590; 3,163,628; 2,468,054; 2,968,649 und 4,123,603 sowie in der DE-PS 1 074 268; DE-OS 2 635 402 und EP-OS 50 437. Insbesondere können alle diese Copolymere des Vinylidenfluorids auch hergestellt werden in Gegenwart von Permanganaten als Initiatoren, wie beschrieben in der DE-PS 1 720 801.

Der Polymeranteil des Formkörpers enthält zwischen 20 und 50 Gew.-%, bezogen auf den Polymeranteil, polymerisierte Einheiten des Vinylidenfluorids. Bei höheren wie niedrigeren Vinylidenfluoridgehalten tritt bei der Bestrahlung eine Verschlechterung der mechanischen Werte bei Raumtemperatur, insbesondere der Bruchdehnung ein. Besonders gute Ergebnisse werden erhalten, wenn der Polymeranteil aus folgenden polymerisierten Einheiten besteht:

a) 20 bis 50 Gew.-% Vinylidenfluorid; b) 35 bis 70 Gew.-% Tetrafluorethen; c) 10 bis 30 Gew.-% Hexafluorpropen,

mit der Maßgabe daß die Mengen a + b + c 100 Gew.-% ergeben, wobei sich die Gewichtsprozent-Angaben auf den Polymeranteil beziehen.

Der Polymeranteil des Formkörpers sollte teilkristallin sein, das heißt 10 bis 70 Gew.-% kristalline Anteile enthalten und einen Kristallitschmelzpunkt von 100 bis 240 °C, gemessen mit Differential-Thermoanalyse, aufweisen.

Polymere mit einem Schmelzpunkt von unter 100 °C sind für die vorgesehenen Anwendungen zu weich. Oberhalb von 240 °C wird die Verarbeitbarkeit schwieriger und es geht somit ein wesentlicher Vorteil für die Herstellung des Formkörpers verloren.

Der Formkörper kann gegebenenfalls bis zu 20 Gew.-%, bezogen auf den Formkörper, von einem oder mehreren inerten Zusatzstoffen enthalten. Solche inerten Zusatzstoffe sind beispielsweise anorganische Farbpigmente, wie Eisenoxide, Cadmiumpigmente, Chromoxide, sulfithaltige Aluminium-Natriumsilicate, Titandioxid, Ruß oder Graphit; organische Farbpigmente beziehungsweise Pigmentpräparationen, wie PV-Echtpigmente, ferner Füllstoffe wie Quarzmehl, Schiefermehl, Talkum, gefällte und natürliche Calciumcarbonate, Kaolin, Bariumsulfat, Zinkoxid, Aluminiumhydroxid, Glimmer, Wollastonit, Metallpulver, beispielsweise Eisen, Chrom, Nickel, Aluminium, Titan sowie deren Legierungen; außerdem Verstärkungsstoffe, wie Fasern aus Glas, Kohlenstoff, Keramik, Polyester, Polyamid, Polytetrafluorethylen, wobei die Fasern auch in Form von Geweben vorliegen können.

Die erfindungsgemäßen Formkörper werden hergestellt durch das nachfolgend beschriebene Verfahren, das ebenfalls Gegenstand der Erfindung ist:

Mindestens ein thermoplastisches fluorhaltiges Polymeres, gegebenenfalls in Mischung mit bis zu 20 Gew.-%, bezogen auf die Mischung, Zusatzstoffen, wird bei 120 bis 350 °C zu einem Formkörper verformt und anschließend ionisierender Strahlung ausgesetzt, mit dem Kennzeichen, daß das fluorhaltige, thermoplastische Polymere ausschließlich aus polymerisierten Einheiten des Vinylidenfluorids und anderen fluorhaltigen Monomeren, die nur eine C = C-Doppelbindung enthalten, besteht, 20 bis 50 Gew.-%, bezogen auf das Polymere, polymerisierte Einheiten des Vinylidenfluorids enthält, einen Kristallitschmelzpunkt von 100 bis 240 °C und einen Schmelzindex von mindestens 1 g/10 min, gemessen bei 250 °C mit 11 kg Last, aufweist, wobei keine Stoffe zugegeben werden, die polymerisationsfähige Doppelbindungen enthalten und die Bestrahlung mit einer Dosis von mindestens 50 kGy und einer Dosisleistung von mindestens 2 Gy/s erfolgt.

Besonders gute Ergebnisse werden erhalten, wenn eine thermoplastisches, fluorhaltiges Polymeres eingesetzt wird, das aus folgenden polymerisierten Einheiten besteht: a) 20 bis 50 Gew.-% Vinylidenfluorid;
b) 35 bis 70 Gew.-% Tetrafluorethen;
c) 10 bis 30 Gew.-% Hexafluorpropen,
mit der Maßgabe, daß die Mengen a + b + c 100 Gew.-% ergeben, wobei alle Gewichtsprozent-Angaben auf das Polymere bezogen sind.

Es können auch Mischungen der weiter oben genannten fluorhaltigen, thermoplastischen Polymeren verwendet werden, sofern sie die genannten Gehalte an polymerisierten Vinylidenfluorid-Einheiten aufweisen, vorzugsweise wird jedoch nur ein solches Polymeres verwendet.

Als Zumischkomponente kommen, wie oben bereits beschrieben, Pigmente, Füll- und Verstärkungsstoffe in Frage. Eine Besonderheit des erfindungsgemäßen Verfahrens ist, daß keine Stoffe zugegeben werden müssen, die polymerisationsfähige Doppelbindungen enthalten. Insbesondere ist die Zugabe von Verbindungen mit zwei oder mehr ethylenisch ungesättigten Doppelbindungen, die üblicherweise zum Vernetzen von fluorierten Polymeren eingesetzt werden, nicht erforderlich.

3

Thermoplastische, fluorhaltige Polymere, die für das erfindungsgemäße Verfahren eingesetzt werden, enthalten keine oder allenfalls eine C=C-Doppelbindung pro Makromolekül, wie sie beispielsweise durch Infrarot-Absorptionsbanden im typischen Bereich von 1 590 bis 1 760 cm$^{-1}$ feststellbar sind. Sie sind nicht elastomer, sondern, wie oben bereits ausgeführt, teilkristallin mit 10 bis 70 Gew.-% kristallinen Anteilen und thermoplastisch verarbeitbar.

Nach der Formgebung wird der Formkörper ionisierender Strahlung ausgesetzt. Hierzu sind sowohl Korpuskularstrahlen, wie Beta-Strahlen, als auch elektromagnetische Strahlen, wie Gamma-Strahlen, geeignet. Die Art der Strahlung, wie auch ihren Energieinhalt, wählt man zweckmäßig in Abhängigkeit von der Dicke des Formkörpers. Bei der am häufigsten verwendeten Bestrahlung mit Elektronenstrahlen ist im allgemeinen ein Energieinhalt von $0{,}1 \cdot 10^6$ eV ausreichend.

Die Strahlendosis sollte mindestens 50 kGy betragen, da mit geringeren Dosen keine wesentlichen Eigenschaftsverbesserungen erzielt werden. Ab einer Dosis von 500 kGy können, je nach der Art des verwendeten Vinylidenfluorid-Copolymeren, Abbauerscheinungen auftreten. Vorzugsweise wird mit einer Strahlendosis von 60 bis 300 kGy gearbeitet.

Bei der Bestrahlung sollte eine Dosisleistung von mindestens 2 Gy/s erreicht werden, da sonst ebenfalls die mechanischen Eigenschaften der Formkörper nachlassen, vorzugsweise wird mit einer Dosisleistung von 20 bis 2 000 Gy/s gearbeitet. Wenn vergleichsweise geringe Dosisleistungen von weniger als 200 Gy/s verwendet werden, wird in einer weiteren bevorzugten Ausführungsform des erfindungsgemäßen Verfahrens unter Ausschluß von Sauerstoff oder unter stark vermindertem Sauerstoffdruck gearbeitet, um Oxidationsvorgänge hintanzuhalten.

Die Bestrahlung kann in handelsüblichen Einrichtungen, je nach anzuwendender Strahlendosis, in ein- oder mehrfachem Durchlauf durchgeführt werden, wobei eine Temperierung des Formkörpers nicht notwendig ist.

Für die Formgebung ist jede Art der thermoplastischen Verformung, beispielsweise Extrudieren, Blasextrudieren, Verschäumen, Kalandrieren oder Spritzgießen geeignet. Beispiele für Formkörper sind Folien, Schläuche, Rohre, Behälter aller Art, jedoch auch Überzüge der Formkörper, die deren Gestalt annehmen und damit selbst als Formkörper bezeichnet werden können, beispielsweise eine Kabelummantelung.

Nach der erfindungsgemäßen Strahlenbehandlung kann der Formkörper gedehnt und durch Erwärmen über den Kristallitschmelzpunkt einem anderen Formkörper aufgeschrumpft werden.

Wie oben bereits erwähnt, kann für das erfindungsgemäße Verfahren mindestens ein thermoplastisches, fluorhaltiges Polymeres, gegebenenfalls in Mischung mit bis zu 20 Gew.-%, bezogen auf die Mischung, Zusatzstoffen, eingesetzt werden. Vorzugsweise werden jedoch keine oder nur bis zu 5 Gew.-%, bezogen auf die Mischung, Zusatzstoffe verwendet. Ebenso bevorzugt werden thermoplastische, fluorhaltige Polymere, die einen Kristallitschmelzpunkt von 100 bis 160 °C aufweisen, eingesetzt.

Die erfindungsgemäßen Formkörper können vergleichsweise einfach in einem günstigen thermoplastischen Verarbeitungsbereich erzeugt werden, weisen gute mechanische Eigenschaften und chemische Beständigkeit auf und zeigen keinerlei Verfärbung.

Nachfolgende Beispiele sollen die Erfindung näher erläutern:

Zur besseren Übersichtlichkeit sind die Versuchsergebnisse in einer Tabelle zusammengefaßt.

Beispiel 1

Ein trockenes Granulat eines Terpolymeren, bestehend aus 40 Gew.-% polymerisierten Einheiten des Tetrafluorethens, 40 Gew.-% polymerisierten Einheiten des Vinylidenfluorids und 20 Gew.-% polymerisierten Einheiten des Hexafluorpropens (alle Gewichtsprozent-Angaben beziehen sich auf das Terpolymere), wird in einem Extruder schmelzgranuliert und das Schmelzgranulat bei einer wenig über dem Schmelzpunkt des Terpolymeren liegenden Temperatur zu Platten von 2 mm Dicke und den Abmessungen 100 x 100 mm verpreßt.

Diese Platten werden mit Elektronen-(Beta)-Strahlen einer Energie von 3 MeV mit einer Dosisleistung von 500 Gy/s bestrahlt, wobei unterschiedliche Dosismengen angewendet werden. Je eine Platte wird mit einer Dosis von 50, 100, 150 und 300 kGy bei Raumtemperatur ohne Kühlung der Platten bestrahlt. Jeweils vor und nach dieser Bestrahlung werden folgende Werte an den Platten gemessen:

Der Schmelzindex (MFI) in g bei 11 kg Belastung und einer Temperatur von 250 °C; der Torsionsschubmodul (TSM) in N/mm$^2$ bei 250 °C und die Reißdehnung (RD) in % bei 20 °C. Die Ergebnisse sind in nachfolgender Tabelle aufgeführt.

4

Beispiel 2

Eine Platte aus denselben Polymeren, mit denselben Abmessungen wie in Beispiel 1 beschrieben, wird in einer Anlage, wie sie versuchsweise zur Strahlensterilisierung verwendet wird, mit Gamma-Strahlen mit einer Dosis von 150 kGy und einer Dosisleistung von 5 Gy/s bei Raumtemperatur ohne Kühlung der Platten bestrahlt. Wie in Beispiel 1 beschrieben, werden Schmelzindex, Torsionsschubmodul und Reißdehnung vor und nach der Bestrahlung ermittelt. Die Werte sind in nachfolgender Tabelle aufgeführt.

Beispiele 3 bis 5

Es wird verfahren wie in Beispiel 1 angegeben, jedoch werden anstelle des dort verwendeten Terpolymeren drei Terpolymere unterschiedlicher Zusammensetzung mit steigendem Gehalt an polymerisierten Tetrafluorethen-und sinkendem Gehalt an polymerisierten Vinylidenfluorid-Einheiten sowie steigenden Schmelzpunkten eingesetzt. Die genaue Zusammensetzung ist aus nachfolgender Tabelle ersichtlich. Die Bestrahlung der Platten erfolgt bei Zimmertemperatur ohne Kühlung, wie in Beispiel 1 beschrieben, mit einer Dosis von 300 kGy und einer Dosisleistung von 500 Gy/s. Die vor und nach der Bestrahlung ermittelten Werte für Schmelzindex, Torsionsschubmodul und Reißdehnung sind aus nachfolgender Tabelle ersichtlich.

Vergleichsversuch A

Es wird verfahren wie in Beispiel 1 beschrieben, jedoch anstelle des dort angewendeten Terpolymeren wird ein solches eingesetzt, das aus 85 Gew.-% polymerisierten Einheiten des Tetrafluorethens, 12 Gew.-% polymerisierten Einheiten des Vinylidenfluorids und 3 Gew.-% polymerisierten Einheiten des Perfluorpropylperfluorvinylethers besteht (alle Gewichtsprozent-Einheiten beziehen sich auf das Terpolymere). Dieses Polymere hat einen Schmelzpunkt von 270 °C. Die daraus, wie in Beispiel 1 beschrieben, hergestellten Platten werden mit Elektronenstrahlen einer Energie von 3 MeV mit einer Dosisleistung von 500 Gy/s bestrahlt. Vor und nach der Bestrahlung werden Schmelzindex, Torsionsschubmodul (bei 300 °C) und Reißdehnung gemessen. Bei einer Strahlungsdosis von 300 kGy wird eine starke Versprödung der Platte beobachtet, die Reißdehnung sinkt drastisch ab.

Die Meßmethoden für Schmelzindex, Torsionsschubmodul und Reißdehnung sind weiter oben angegeben, der Schmelzpunkt des Terpolymeren wird vermittels Differential-Thermoanalyse bestimmt. Die jeweils verwendete Beta- beziehungsweise Gamma-Strahlenquelle hat eine bekannte Dosisleistung. Die unterschiedlichen Bestrahlungsdosen werden durch Einstellung der Bestrahlungszeit erreicht.

In nachfolgender Tabelle bedeuten:

TFE = Gewichtsprozent polymerisierte Einheiten des Tetrafluorethens
VDF = Gewichtsprozent polymerisierte Einheiten des Vinylidenfluorids
HFP = Gewichtsprozent polymerisierte Einheiten des Hexafluorpropens
PPVE = polymerisierte Einheiten des Perfluorpropylperfluorvinylethers
FP = Schmelzpunkt des Polymeren
Dosis ß = angewendete Dosis der Bestrahlung mit Elektronen-(Beta)-Strahlen in kGy
Dosis $\gamma$ = angewendete Dosis von Gamma-Strahlen in kGy
Dosis-1 = angewendete Dosisleistung in Gy/s

Die Bedeutung der Abkürzungen MFI; TSM und RD sind bei Beispiel 1 erklärt. Die Bezeichnungen "vor" und "nach" beziehen sich auf die Messung vor beziehungsweise nach der Bestrahlung.

Tabelle

| Beispiel bzw. Vergleich | Zusammensetzung des Polymeren (in Gew.-%) | | | Fp °C | Dosis β kGy | Dosis γ kGy | Dosis-l Gy/s | MFi (g/11 kg) | | TSM (N/mm²) | | RD (%) | |
|---|---|---|---|---|---|---|---|---|---|---|---|---|---|
| | TFE | VDF | HFP | | | | | vor | nach | vor | nach | vor | nach |
| 1 | 40 | 40 | 20 | 120 | 50 | - | 500 | 25 | 0 | 0 | 0,8 | 600 | 600 |
| 1 | 40 | 40 | 20 | 120 | 100 | - | 500 | 25 | 0 | 0 | 0,9 | 600 | 550 |
| 1 | 40 | 40 | 20 | 120 | 150 | - | 500 | 25 | 0 | 0 | 1,1 | 600 | 500 |
| 1 | 40 | 40 | 20 | 120 | 300 | - | 500 | 25 | 0 | 0 | 1,0 | 600 | 500 |
| 2 | 40 | 40 | 20 | 120 | - | 150 | 5 | 25 | 0 | 0 | 1,1 | 600 | 400 |
| 3 | 55 | 30 | 15 | 155 | 300 | - | 500 | 25 | 0 | 0 | 1,6 | 550 | 400 |
| 4 | 60 | 25 | 15 | 175 | 300 | - | 500 | 25 | 0 | 0 | 1,8 | 500 | 350 |
| 5 | 65 | 20 | 15 | 190 | 300 | - | 500 | 20 | 0 | 0 | 2,0 | 450 | 300 |
| A | 85 | 12 | 3 PPVE | 270 | 300 | - | 500 | 10 | 0 | 0*) | 1,1*) | 500 | 50 |

*) bei 300 °C gemessen

## Patentansprüche

1. Formkörper, hergestellt durch thermoplastische Verformung eines fluorhaltigen Polymeren, das, gemessen bei 250 °C mit 11 kg Last, einen Schmelzindex von mindestens 1 g/10 min aufweist und dem gegebenenfalls bis zu 20 Gew.-%, bezogen auf den Formkörper, von einem oder mehreren inerten Zusatzstoffe beigemischt sind und anschließende Behandlung mit ionisierender Strahlung, dadurch gekennzeichnet, daß der Polymeranteil des Formkörpers ausschließlich aus polymerisierten Einheiten des Vinylidenfluorids und anderen fluorhaltigen Monomeren, die nur eine C = C-Doppelbindung enthalten, besteht, 20 bis 50 Gew.-%, bezogen auf das Polymere, polymerisierte Einheiten des Vinylidenfluorids innehat und einen Kristallitschmelzpunkt von 100 bis 240 °C aufweist, wobei der Formkörper bei Raumtemperatur eine Reißdehnung (DIN 53455) von mindestens 250 % aufweist und bei 250 °C einen Torsionsschubmodul (DIN 53445) von mindestens 0,5 N/mm$^2$ hat sowie bei 250°C mit 11 kg Last keinen meßbaren Schmelzindex zeigt.

2. Formkörper nach Anspruch 1, dadurch gekennzeichnet, daß der Polymeranteil ausschließlich aus polymerisierten Einheiten des Vinylidenfluorids, Tetrafluorethens und Hexafluorpropens besteht.

3. Formkörper nach Anspruch 2, dadurch gekennzeichnet, daß der Polymeranteil aus folgenden polymerisierten Einheiten besteht:
a) 20 bis 50 Gew.-% Vinylidenfluorid; b) 35 bis 70 Gew.-% Tetrafluorethen; c) 10 bis 30 Gew.-% Hexafluorpropen,
mit der Maßgabe, daß die Mengen a + b + c 100 Gew.-% ergeben, wobei die Gewichtsprozent-Angaben auf den Polymeranteil bezogen sind.

4. Verfahren zur Herstellung eines Formkörpers nach Anspruch 1, wobei mindestens ein thermoplastisches, fluorhaltiges Polymeres, gegebenenfalls in Mischung mit bis zu 20 Gew.-%, bezogen auf die Mischung, Zusatzstoffen, bei 120 bis 350 °C zu einem Formkörper verformt und anschließend ionisierender Strahlung ausgesetzt wird, dadurch gekennzeichnet, daß das fluorhaltige, thermoplastische Polymere ausschließlich aus polymerisierten Einheiten des Vinylidenfluorids und anderen fluorhaltigen Monomeren, die nur eine C = C-Doppelbindung enthalten, besteht, 20 bis 50 Gew.-%, bezogen auf das Polymere, polymerisierte Einheiten des Vinylidenfluorids enthält, einen Kristallitschmelzpunkt von 100 bis 240 °C und einen Schmelzindex von mindestens 1 g/10 min, gemessen bei 250 °C und 11 kg Last, aufweist, wobei keine Stoffe zugegeben werden, die polymerisationsfähige Doppelbindungen enthalten und die Bestrahlung mit einer Dosis von mindestens 50 kGy und einer Dosisleistung von mindestens 2 Gy/s erfolgt.

5. Verfahren nach Anspruch 4, dadurch gekennzeichnet, daß der Formkörper mit einer Dosis von 60 bis 500 kGy bestrahlt wird.

6. Verfahren nach Anspruch 4 oder 5, dadurch gekennzeichnet, daß das thermoplastische, fluorhaltige Polymere aus folgenden polymerisierten Einheiten besteht:
a) 20 bis 50 Gew.-% Vinylidenfluorid;
b) 35 bis 70 Gew.-% Tetrafluorethen;
c) 10 bis 30 Gew.-% Hexafluorpropen,
mit der Maßgabe, daß die Mengen a + b + c 100 Gew.-% ergeben, wobei alle Gewichtsprozent-Angaben auf das Polymere bezogen sind.

7. Verfahren nach einem oder mehreren der Ansprüche 4 bis 6, dadurch gekennzeichnet, daß bei Anwendung von Dosisleistungen von weniger als 200 Gy/s unter Ausschluß von Sauerstoff oder unter stark vermindertem Sauerstoffdruck gearbeitet wird.

**Claims**

1. A molding, produced by thermoplastic shaping of a fluorine-containing polymer, which has a melt flow index of at least 1 g/10 min measured at 250°C with an 11 kg load, and with which optionally up to 20% by weight, based on the molding, of one or more inert additives are mixed, and subsequent treatment with ionizing radiation, wherein the polymer component of the molding comprises, exclusively, polymerized units of vinylidene fluoride and other fluorine-containing monomers, which contain only one C = C double bond, contains 20 to 50% by weight, based on the polymer, of polymerized units of vinylidene fluoride and has a crystallite melting point of 100 to 240°C, the molding having an elongation at break (DIN 53 455) of at least 250% at room temperature and a torsional shear modulus (DIN 53 445) at 250°C of at least 0.5 N/mm$^2$ and having no measurable melt flow index at 250°C with an 11 kg load.

2. The molding as claimed in claim 1, wherein the polymer component comprises, exclusively, polymerized units of vinylidene fluoride, tetrafluoroethene and hexafluoropropene.

3. The molding as claimed in claim 2, wherein the polymer component comprises the following polymerized units:
a) 20 to 50% by weight of vinylidene fluoride; b) 35 to 70% by weight of tetrafluoroethene; c) 10 to 30% by weight of hexafluoropropene,
with the proviso that the quantities a + b + c make up 100% by weight, the percent by weight data being based on the polymer component.

4. A process for the production of a molding as claimed in claim 1, in which at least one thermoplastic fluorine-containing polymer optionally as a mixture with up to 20% by weight, based on the mixture, of additives, is shaped at 120 to 350°C to a molding and subsequently exposed to ionizing radiation, wherein the fluorine-containing, thermoplastic polymer comprises, exclusively, polymerized units of vinylidene fluoride and other fluorine-containing monomers, which contain only one C = C double bond, contains 20 to 50% by weight based on the polymer, of polymerized units of vinylidene fluoride, has a crystallite melting point of 100 to 240°C and a melt flow index of at least 1 g/10 min, measured at 250°C with 11 kg load, no materials being added which contain polymerizable double bonds and the irradiation being carried out with a dose of at least 50 kGy and a dose rate of at least 2 Gy/s.

5. The process as claimed in claim 4, wherein the molding is irradiated with a dose of 60 to 500 kGy.

6. The process as claimed in claim 4 or 5, wherein the thermoplastic, fluorine-containing polymer comprises the following polymerized units:
a) 20 to 50% by weight of vinylidene fluoride;
b) 35 to 70% by weight of tetrafluoroethene;
c) 10 to 30% by weight of hexafluoropropene,
with the proviso that the quantities a + b + c make up 100% by weight, all the percent by weight data being based on the polymer.

7. The process as claimed in one or more of claims 4 to 6, wherein, while using dose rates of less than 200 Gy/s, the operation is carried out with the exclusion of oxygen or under greatly reduced oxygen pressure.

**Revendications**

1. Produit de moulage obtenu par déformation thermoplastique d'un polymère fluoré qui présente un indice de fusion d'au moins 1 g/10 min , mesuré à 250°C sous une charge de 11 kg et auquel on mélange, le cas échéant, un ou plusieurs additifs inertes en quantités allant jusqu'à 20% en poids par rapport au produit de moulage et que l'on traite ensuite par rayonnement ionisant, caractérisé en ce que la fraction polymère du produit de moulage est composée exclusivement d'unités polymérisées de fluorure de vinylidène et d'autres monomères fluorés qui ne contiennent qu'une seule double liaison C = C, contient 20 à 50% en poids d'unités polymérisées de fluorure de vinylidène par rapport au polymère et présente un point de fusion du cristallite de 100 à 240 °C, l'indice de fusion à température ambiante (DIN 53455) du produit de moulage étant d'au moins 250% et le module de torsion au cisaillement à 250°C (DIN 53445) étant d'au moins 0,5 N/mm$^2$ ainsi qu'il ne présente pas d'incide de fusion mesurable à 250°C sous une charge de 11 kg.

2. Produit de moulage selon la revendication 1, caractérisé en ce que la fraction polymère est composée exclusivement d'unités polymérisées de fluorure de vinylidène, de tetrafluoréthène et d'hexafluoropropène.

3. Produit de moulage selon la revendication 2, caractérisé en ce que la fraction polymère est composée des unités polymérisées suivantes :
a) de 20 à 50% en poids de fluorure de vinylidène; b) de 35 à 70% en poids de tétrafluoréthène; c) de 10 à 30% en poids d'héxafluoropropène,

8

à condition que les quantités a + b + c donnent 100% en poids, les données en pourcentages en poids étant relatives à la fraction polymère.

4. Procédé pour la fabrication d'un produit de moulage selon la revendication 1, en déformant au moins un polymère thermoplastique fluoré à une température de 120 à 350°C, le cas échéant en mélange avec une quantité d'additifs allant jusqu'à 20% en poids par rapport au mélange, pour obtenir le produit de moulage et ensuite, en exposant celui-ci au rayonnement ionisant, caractérisé en ce que le polymère thermoplastique fluoré est composé exclusivement d'unités polymérisées de fluorure de vinylidène et d'autres monomères fluorés contenant une seule double liaison C = C, contenant 20 à 50% en poids d'unités polymérisées de fluorure de vinylidène par rapport au polymère, présentant un point de fusion du cristallite de 100 à 240°C et un indice de fusion d'au moins 1 g/10 min. mesuré à 250°C et sous une charge de 11 kg sans ajouter de matières contenant des doubles liaisons polymérisables et on réalise l'irradiation avec une dose au moins de 50 kGy et un débit de dose au moins de 2 Gy/s.

5. Procédé selon la revendication 4, caractérisé en ce qu'on irradie le produit de moulage par une dose de 60 à 500 kGy.

6. Procédé selon la revendication 4 ou 5, caractérisé en ce que le polymère fluoré thermoplastique est composé des unités polymérisées suivantes :
   a) 20 à 50% en poids de fluorure de vinylidène
   b) 35 à 70% en poids de tetrafluoréthène
   c) de 10 à 30% en poids d'hexafluoropropène
à condition que les quantités a + b + c donnent 100% en poids, toutes les données en pourcentages en poids étant relatives au polymère.

7. Procédé selon l'une ou plusieurs des revendications 4 à 6, caractérisé en ce qu'on travaille sans oxygène ou sous une pression d'oxygène fortement réduite lorsqu'on utilise des débits de dose inférieurs à 200 Gy.